# EUROPEAN PATENT APPLICATION

(11) **EP 4 467 229 A1**
(43) Date of publication of application: **27.11.2024**
(21) Application number: 23020257.4
(22) Date of filing: 26.05.2023
(51) Int. Cl.: B01D 53/56

(54) **IMPROVED NOX REMOVAL METHOD**

(71) Applicant: Linde GmbH, 82049 Pullach (DE)
(72) Inventor: Obermeyer, Heinz-Dieter, 82049 Pullach (DE)
(74) Representative: Gellner, Bernd

(57) **Abstract**

The present invention relates to a method for removing nitrogen oxides from a process gas stream wherein said process gas stream contains water or water vapour. Ozone is fed to the process gas stream in an amount to oxidize nitrogen oxides to N₂O₅, the process gas stream is cooled and at least part of the water vapour is condensed to get liquid water.

## Description

The present invention relates to a method for removing nitrogen oxides from a process gas stream wherein said process gas stream contains water or water vapour.

The incineration of chemical and hazardous waste is of increasing interest when alternative methods to treat wastes are prohibitively costly or no longer permitted. International treaties and environmental regulations have limited alternatives such as the dumping of waste or ineffective treatments before emitting to the atmosphere. Process industries that desire to reach peak production often undertake optimization and intensification exercises to maximize production and profits with relatively low marginal investment in capital. These exercises will often result in an increase in the quantity of waste gas generated which may be beyond the capability of the already installed waste gas treatment system to handle. A new waste gas treatment system can be expensive and generally will attract stricter environmental scrutiny. Notwithstanding the need for flue gas treatment equipment, the control of contaminants, particularly nitrogen oxides in gas streams has always been challenging.

State of the art control of nitrogen oxides emissions in incineration is generally achieved by combustion modifications. There are typically two techniques used: low nitrogen oxides burners and combustion staging. Low nitrogen oxides burners lower the flame temperature thereby forming less nitrogen oxides. In combustion staging, in the primary stage the initial combustion is carried out with limited air present, thereby forming a fuel rich environment. This ensures the formation of a reducing zone immediately downstream of the primary combustion zone where nitrogen oxides are reduced by a high level of carbon monoxide being present in the combustion products. In the second stage of the process, secondary air is introduced to complete the oxidation of combustion products including the carbon monoxide with or without the addition of supplemental fuel. Ammonia may be injected to lower nitrogen oxides by the SNCR (selective non catalytic reduction) method. A higher end method for controlling nitrogen oxides for combusting processes is SCR (selective catalytic reduction). This is an expensive method for treating incineration exhaust due to a variety of reasons including high capital costs and energy intensive configurations required to offer sustainable performance.

Ozone injection into an Air Pollution Control (APC) system for treating incineration exhaust enables effective nitrogen oxides removal along with other contaminants. The chemistry of nitrogen oxides oxidation with ozone is known and for example described in EP1950176B1. In prior art processes ozone is injected into the flue gas stream and upstream of a scrubber unit. Nitrogen oxides, NO and NO₂ are selectively oxidized via the following reactions to N₂O₅, a highly water-soluble species.

NO (g) + O₃ (g) → NO₂ (g) + O₂ (g)

NO₂ (g) + O₃ (g) → NO₃ (g) + O₂ (g)

NO₂ (g) + NO₃ (g) → N₂O₅ (g)

N₂O₅ (g) + H₂O (l) → 2HNO₃ (l)

A molar ratio, of 1.5 O₃ to NO is required based on the above chemical equations, where all NO is converted first to NO₂ and then N₂O₅. This pentavalent form of nitrogen oxide is quite soluble in aqueous solutions. A wet or dry scrubber is installed after the injection of the ozone into the flue gas stream. In the scrubber unit the stream is then saturated with water vapor which converts the oxidized nitrogen oxides into stable oxyacids such as nitric acid, which will mix with water and be captured in the wet scrubbing operation. This scrubber is an additional piece of equipment to dissolve the reaction product of NO with ozone in liquid.

It is an object of the present invention to provide an improved method for removing nitrogen oxides from a process gas stream.

This object is achieved by the method according to claim 1.

The present invention provides a new method for ozone-based control of contaminants such as nitrogen oxides. The method of the invention allows for a higher reduction of NOx in waste gas streams emanating from the incineration unit. The invention also requires minimal capital investment, does not disrupt production activity, and requires only minimal changes in processing equipment. Thus, this proposed invention will assist in the commercialization of and adoption of ozone for NOx abatement in incinerator units, waste treatment plants, or kilns.

The inventive method for removing nitrogen oxides from a process gas stream takes advantage of water or water vapour present in the process gas stream. Ozone is fed to or injected into the process gas stream in an amount to oxidize the nitrogen oxides to N₂O₅. The process gas stream is subsequently cooled down in order to condense at least part of the water vapour into liquid water. The N₂O₅ is dissolved in the water and separated from said process gas stream. Preferably, in order to condense the water the process gas stream is cooled to a temperature below 100°C, the water is condensed, N₂O₅ is dissolved in the water and the water is subsequently drained and separated from the process gas stream.

Preferably, after the step of feeding ozone the process gas stream is not treated in a scrubbing unit. After the reaction of the ozone with the nitrogen oxides the process gas stream is cooled down to condense water vapour into water. The reaction product N₂O₅ is dissolved in the condensing water. No scrubber or scrubbing unit is provided downstream of the ozone feeding point to wash out N₂O₅. This is solely done by using the condensing water present in the process gas stream prior to the ozone injection. The scrubber as used in the prior art can be saved.

The oxidation of the nitrogen oxides with ozone is preferably carried out in a temperature range between 90°C and 160°C. If the temperature of the process gas stream is above this temperature range, the process gas stream is preferably cooled to a temperature between 90°C and 160°C prior to or at the same time with feeding ozone to the process gas stream. In a preferred embodiment the process gas stream is cooled by injection of water into the process gas stream.

For example, for a process gas stream which has a temperature higher than the above mentioned process temperature range a water injection could be done together or before the ozone injection to adjust the process gas temperature to a temperature in the range of 90 to 160 °C. This additional water is collected in the condenser. A part of the condensed water could be used again for the flue gas cooling.

In one embodiment, the amount of ozone fed to the process gas stream is such that more than 60 vol-% of the nitrogen oxides present in the process gas stream, preferably more than 75 vol-% of the nitrogen oxides present in the process gas stream or preferably more than 90 vol-% of the nitrogen oxides present in the process waste gas stream are oxidized to N₂O₅.

In another embodiment, the reaction of ozone and the nitrogen oxides is carried out in a reaction zone. The amount of ozone fed to the process gas stream and the residence time of the ozone and the process gas stream in the reaction zone are chosen to oxidize more than 60 vol-% of the nitrogen oxides present in the process gas stream to N₂O₅, preferably more than 75 vol-% of the nitrogen oxides present in the process gas stream or preferably more than 90 vol-% of the nitrogen oxides present in the process waste gas stream.

The invention is in particular useful to remove nitrogen oxides from a process gas stream arising from an industrial process. For example, the process gas stream could be an exhaust gas stream or flue gas stream from a chemical, metallurgical, partial or full combustion process. The process gas stream could originate from industrial boilers, power generation systems, and / or combustion processes. Another preferred area of application of the present invention is the removal of nitrogen oxides from a process gas stream of a sulphuric acid production or the removal of nitrogen oxides from a process or flue gas stream from a cement plant.

The nitrogen oxides in the process gas stream preferably comprise nitric oxide (NO) and / or nitrogen dioxide (NO₂). In one embodiment, the nitrogen oxides essentially consist of nitric oxide and / or nitrogen dioxide.

In another embodiment of the invention water or water vapour is added to the process gas stream prior to or together with feeding the ozone to the process gas stream. As explained above, the invention takes advantage of water vapour present in the process gas stream. After the ozone has reacted with the nitrogen oxides present in the process gas stream, the process gas stream is cooled down to condense the water and N₂O₅ resutling from the oxidation of nitrogen oxides is dissolved in the water. If there is not sufficient water or water vapour originally present in the process gas stream to condense the N₂O₅ additional water or water vapour is introduced into the process gas stream.

In another embodiment, the inventive method comprises an additional removal step downstream of the ozone treatment to remove CO2. Such treatment to remove CO2 is preferably an amine wash.

The invention has several advantages compared to the prior art.
- Lower CAPEX for the process.
- Reduced plot space for the process.
- Reduced complexity of the process as no scrubber has to be incorporated in the control.
- No additional neutralization for the scrubber as the water is always drained
- For processes where NOx has to be reduced and the water content in the downstream process is disadvantageous the invention is a cheap opportunity to combine both processes.

The invention as well as further details of the invention shall be explained with reference to the figures.

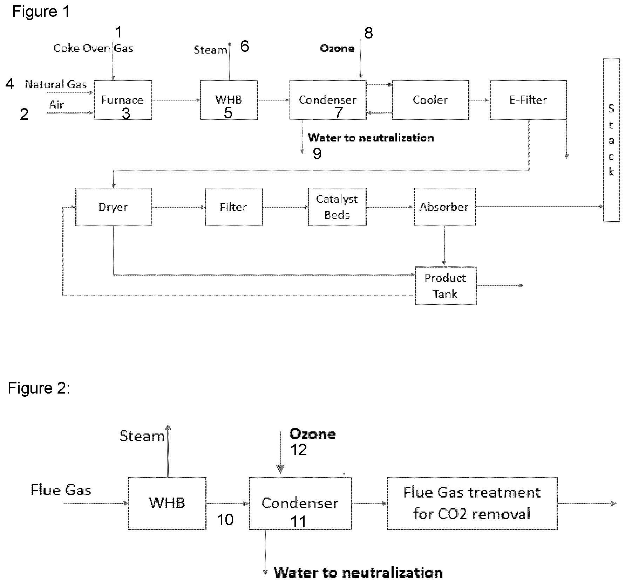

- Figure 1: shows the implementation of the present invention in a process for sulphuric acid production.
- Figure 2: shows the application of the present invention in a cement plant.

### Example 1: Sulphuric acid production with implemented NOx removal

In sulphuric acid production sulphur or H₂S containing gas like coke oven gas 1 is incinerated with air 2 in a furnace 3. Natural gas 4 could additionally be provided to achieve the right temperature. The resulting process gas stream is passed to a waste heat boiler 5 and steam 6 is produced. In the waste heat boiler 5 the process gas is cooled to 200 to 300 °C. Downstream of the waste heat boiler 5 the process gas is further cooled in a condenser 7 to a temperature below 100 °C and water is condensed and drained. In the prior art the process gas is then further treated in additional treatment units and in particular in a scrubber to reduce the concentration of nitrogen oxides.

According to the present invention ozone 8 is introduced into the process gas stream downstream of the waste heat boiler 5. The ozone will react with NO to N₂O₅ which then is absorbed in the condensed water and drained with the condensed water 9. The scrubber which is part of the prior art process can be saved and CAPEX and OPEX for the whole process is reduced.

### Example 2: Ozone injection in the condenser before further treatment of the flue gas for CO2 removal

A lot of discussions are currently about carbon capture, utilization and storage (CCUS). Cement plants have a very high CO2 footprint and different carbon-capture technologies have been proposed for use in the cement industry. These carbon-capture technologies require very low NOx values (<30 mg/m³) in the process gas stream. This is especially important if an amine wash is used for the CO2 removal as NO2 is blocking the active sites of the washing agent. As water is always present in the flue gas (process gas) the treatment of the process gas stream 10 includes as one of the first steps water removal by condensation in condensing equipment 11. According to the invention ozone 12 is injected into the process gas stream 10 at or upstream of this condensing equipment 11 and the condensing equipment 11 is used to collect the oxidized products from NOx after the ozone injection. In this case as in example 1 the CAPEX and OPEX is reduced and gives an advantage compared to other processes which do need additional equipment.

In the near future the number of CCUS (Carbon Capture, Utilization and Storage) projects is expected to increase significantly. Condensation of water in the process gas will be necessary to get higher CO2 concentrations. For amine scrubbing it is very important to have a very low NOx concentration in the process gas because NO₂ is blocking active sites in the solvent. The inventive solution provides an efficient way to remove NOx from the flue gas.

## Claims

1. A method for removing nitrogen oxides from a process gas stream wherein said process gas stream contains water or water vapour, said method comprising:
- feeding ozone to the process gas stream in an amount to oxidize nitrogen oxides to N₂O₅,
- cooling the process gas stream and condensing at least part of the water vapour to get liquid water, wherein the N₂O₅ is dissolved in the water and separated from said process gas stream.

2. The method according to claim 1 wherein more than 60 vol-% of the nitrogen oxides present in the process gas stream, preferably more than 75 vol-% of the nitrogen oxides present in the process gas stream or preferably more than 90 vol-% of the nitrogen oxides present in the process waste gas stream are oxidized to N₂O₅.

3. The method according to claim 1 or 2, wherein the process gas stream is an exhaust gas stream arising from an industrial process, in particular from a chemical, metallurgical, partial or full combustion process.

4. The method according to claim 3, wherein the industrial process is selected from the group consisting of industrial boilers, power generation systems, sulphuric acid production, and combustion processes.

5. Method according to any of the preceding claims, wherein water or water vapour is added to the process gas stream prior to feeding the ozone to the process gas stream.

6. The method according to any of the preceding claims, wherein the nitrogen oxides are selected from the group consisting of nitric oxide (NO) and nitrogen dioxide (NO2).

7. The method according to any of the preceding claims, wherein after the step of feeding ozone to the process gas stream the process gas stream is not treated in a scrubbing unit.

8. The method according to any of the preceding claims, wherein the process gas stream is cooled to a temperature between 90°C and 160°C prior to feeding ozone to the process gas stream.

9. The method according to claim 8, wherein the process gas stream is cooled by injection of water into the process gas stream.

10. The method according to any of the preceding claims for removing nitrogen oxides from a process gas stream from a cement plant.

11. The method according to any of the preceding claims, wherein downstream of the ozone removal step the process gas stream is treated to remove CO₂.

12. The method according to claim 11, wherein said treatment to remove CO₂ comprises an amine wash.
